# EUROPEAN PATENT APPLICATION

(11) **EP 4 576 035 A1**
(43) Date of publication of application: **25.06.2025**
(21) Application number: 23217435.9
(22) Date of filing: 18.12.2023
(51) Int. Cl.: G08B 13/196, G08B 29/18, H04N 7/18, G06V 10/40, G06T 7/254

(54) **ALARM DETECTOR WITH DUAL SENSORS**

(71) Applicant: Verisure Sàrl, 1290 Versoix (CH)
(72) Inventor: Ivanov, Arseni, 201 23 Malmö (SE); Olsson, Sofie, 201 23 Malmö (SE); Fröjd, Patrik, 201 23 Malmö (SE); Farghaly, Dalia, 201 23 Malmö (SE)
(74) Representative: Hansson Thyresson AB

(57) **Abstract**

A dual detector comprising a presence sensor and an image capturing sensor for an intruder security system is provided. A presence signal above a trigger threshold triggers sampling by the presence sensor for a predetermined time period as well as capturing images by the image capturing means. A signal processor is configured to determine a first intruder likelihood value in dependence on the sampled data while an image processing module is configured to determine a second intruder likelihood value in dependence on the captured images. If either one, or both, of the likelihood values exceeds a first or second threshold respectively, an alarm is issued.

## Description

### TECHNICAL FIELD

The present invention relates to an alarm system for detecting an intruder, and more particularly to detector of such alarm system which is based on dual sensors, and a method of operating the same.

### BACKGROUND

Security installations that are or include security monitoring systems for monitoring premises, often referred to as alarm systems, typically provide a means for detecting the presence and/or actions of people at the premises and reacting to detected events.

Commonly such systems include sensors to detect the opening and closing of doors and windows to provide a secure perimeter to the premises, creating one or more protected interior spaces, movement detectors to monitor spaces (both within and outside buildings) for signs of movement, microphones to detect sounds such as breaking glass, and image sensors to capture still or moving images of monitored areas.

Such security monitoring systems contribute to the safety and wellbeing of occupants of the protected premises, as well as safeguarding articles within the protected perimeter, which may of course not simply be limited to a house or dwelling but may also extend to the grounds of the house, protected by a boundary fence and gate, for example.

Embodiments of the present invention seek to provide enhanced security monitoring systems, methods and other implementations that improve the scope of security monitoring systems to address aspects of the accurate determination of intruder events as well as providing new functionality and methods.

### SUMMARY

The invention is defined by the appended independent claims. Additional features and advantages of the concepts disclosed herein are set forth in the description which follows, and in part will be clear from the description, or may be learned by practice of the described technologies. The features and advantages of the concepts may be realized and obtained by means of the instruments and combinations particularly pointed out in the appended claims. These and other features of the described technologies will become more fully apparent from the following description and appended claims, or may be learned by the practice of the disclosed concepts as set forth herein.

According to a first aspect, there is provided a detector for an intruder security system, the detector comprising: a presence sensor configured to detect presence of a person and/or object; a signal processing module configured to: sample data from the presence sensor for a predetermined time period in response to a trigger signal, and determine a first intruder likelihood value in dependence on the sampled data; an image sensor comprising an image capturing means configured to capture one or more images in response to the trigger signal; and an image processing module configured to determine a second intruder likelihood value in dependence on the captured one or more images, wherein the detector is configured to transmit an alarm signal in response to the first intruder likelihood value exceeding a first threshold and/or the second intruder likelihood value exceeding a second threshold.

The detector according to the first aspect is based on dual sensors. The accuracy of the detector may thus be improved, and, in particular, the amount of false positive alarms (i.e. raising an alarm when no intruder is present) may be reduced.

It will be appreciated that the signal processing module and/or the image processing module may be provided remote from the detector, e.g. on a remote server, a remote computer, or the like. That is, the signal processing module and/or the image processing module may be provided external to a detector housing.

The detector, and/or the alarm system which the detector forms part of, may comprise a control module configured to control the signal processing module and/or the image processing module. That is, the control module may control the signal processing module and/or the image processing module such that they perform the processing steps outlined above.

Optionally, the detector is configured to transmit the alarm signal in response to the second intruder likelihood value exceeding a second threshold.

Optionally, the image processing module is configured to determine the second intruder likelihood value in response to, optionally only in response to, the first intruder likelihood value being below the first threshold. Thus, processing power may be reduced and battery life improved because the detector only relies on image processing when the signal data (from the presence sensor) is inconclusive.

Optionally, the image processing module is configured to determine the second intruder likelihood value in response to, optionally only in response to, the first intruder likelihood value being above a lower threshold, wherein the lower threshold is lower than the first threshold. Thus, processing power may be reduced and battery life improved because the detector only relies on image processing when the signal data (from the presence sensor) is inconclusive.

Optionally, the image processing module is configured to enter a dormant state in response to the first intruder likelihood value exceeding the first threshold. Thus, processing power may be reduced and battery life improved because the processing modules and/or sensors may enter a low-power mode (such as being turned off) when one of the sensors has already yielded conclusive results.

Optionally, the presence sensor comprises at least one selected from a group comprising: a movement sensor, a proximity sensor, an infrared sensor, and a passive infrared sensor.

Optionally, the trigger signal is a signal from the presence sensor exceeding a trigger threshold. Alternatively, the trigger signal may be a signal from another sensor, such as a second presence sensor, a perimeter detector, or the like.

Optionally, the detector is configured to adjust the first and/or second thresholds in dependence on an ambient property. Thus, the weighting of the two sensors in the decision-making may be dynamically adjusted based on the ambient conditions of the sensor, e.g. if it is dark/light and/or warm/cold. For example, the ambient property may be an ambient temperature, an ambient light amount, a property indicative of a time of day, a time of day, or a combination thereof. To measure the ambient property, the detector may comprise an ambient sensor for determining the ambient property, wherein optionally the ambient sensor comprises a temperature sensor, an ambient light sensor, or a combination thereof. Alternatively, the detector may be configured to receive information about the ambient property, e.g. from a control unit, the Internet, an internal or external clock, or any other source comprising data about the ambient property.

Optionally, the predetermined time period is between 0.2 and 20 seconds, optionally between 0.5 and 15 seconds, optionally between 1 and 10 seconds, optionally between 2 and 8 seconds, optionally between 3 and 7 seconds, optionally between 4 and 6 seconds, optionally substantially 5 seconds. The sampled time period has thus been found to be sufficiently long to give useful data for determining the likelihood of an intruder event, while not being so long as to risk the intruder having moved away from the scene before an alarm is raised.

Optionally, the image capturing means is configured to capture a plurality of temporally separated images. For example, subsequent images of the plurality of images may be separated by a time gap of between 0.1 and 5 second, optionally between 0.2 and 3 seconds, optionally between 0.3 and 1 second, optionally between 0.4 and 0.7 seconds, optionally around 0.5 seconds. Thus, the image processing module may more accurately determine the likelihood of an intruder event, for example because the image processing module may identify movement of a person and/or object between the plurality of images.

Optionally, the image processing module is further configured to: reduce the resolution of two of the plurality of temporally separated images so as to obtain two low-resolution images; calculate a difference in an image parameter between the low-resolution images; identify an area of the low-resolution images corresponding to the difference; crop the plurality of temporally separated images to the identified area; determine the second intruder likelihood value in dependence on the cropped images. For example, the image parameter may be luminance. Hence, the computational power and time may be reduced, because the computer-intensive image processing (in determining the likelihood value) is only performed on relevant areas of the images.

In a second aspect, there is provided an intruder security system comprising: a detector according to the first aspect, and a control unit configured to raise an alarm in response to receiving the alarm signal from the detector.

In a third aspect, there is provided an intruder security system comprising: a presence sensor configured to detect presence of a person and/or object; a signal processing module configured to: sample data from the presence sensor for a predetermined time period in response to a trigger signal, and determine a first intruder likelihood value in dependence on the sampled data; an image sensor comprising an image capturing means configured to capture one or more images in response to the trigger signal; and an image processing module configured to determine a second intruder likelihood value in dependence on the captured one or more images; and a control unit configured to raise an alarm in response to the first intruder likelihood value exceeding a first threshold and/or the second intruder likelihood value exceeding a second threshold.

In a fourth aspect, there is provided a method of raising an alarm in dependence on detection an intruder, the method comprising: receiving a trigger signal from a presence sensor; in response to the trigger signal, sampling, by a signal processing module, data from the presence sensor for a predetermined time period; in response to the trigger signal, acquiring, by an image capturing means of an image sensor, one or more images; determining, by the signal processing module, a first intruder likelihood value in dependence on the sampled data; determining, by an image processing module, a second intruder likelihood value in dependence on the acquired one or more images; transmitting an alarm signal in response to the first intruder likelihood value exceeding a first threshold and/or the second intruder likelihood value exceeding a second threshold.

In a fifth aspect, there is provided a method of processing a plurality of images, the method comprising: reducing the resolution of two images of a plurality of temporally separated images so as to obtain two low-resolution images; calculating a difference in an image parameter between the low-resolution images; identifying an area of the low-resolution images corresponding to the difference; cropping the plurality of temporally separated images to the identified area. For example, the image parameter may be luminance which has proved advantageous in identifying the relevant areas of the images where movement has occurred.

### BRIEF DESCRIPTION OF THE DRAWINGS

In order to best describe the manner in which the above-described embodiments are implemented, as well as define other advantages and features of the disclosure, a more particular description is provided below and is illustrated in the appended drawings. Understanding that these drawings depict only exemplary embodiments of the invention and are not therefore to be considered to be limiting in scope, the examples will be described and explained with additional specificity and detail through the use of the accompanying drawings in which:
- Fig. 1: shows a building with an intruder security system according to embodiments;
- Fig. 2: shows a detector according to embodiments;
- Fig. 3: shows a method of raising an alarm according to embodiments;
- Fig. 4: shows a method of raising an alarm according to embodiments;
- Fig. 5: shows a method of raising an alarm according to embodiments;
- Fig. 6: shows a timeline of events in determining an intruder event according to embodiments;
- Fig. 7: shows a timeline of events in determining an intruder event according to embodiments;
- Fig. 8: shows a method of raising an alarm according to embodiments;
- Fig. 9: shows a method of raising an alarm according to embodiments;
- Fig. 10: shows a method of processing images according to embodiments.

Further, in the figures like reference characters designate like or corresponding elements or parts throughout the several figures. The first digit in the reference character denotes the first figure in which the corresponding element or part appears.

### DETAILED DESCRIPTION

Various embodiments of the disclosed methods and arrangements are discussed in detail below. While specific implementations are discussed, it should be understood that this is done for illustration purposes only. A person skilled in the relevant art will recognize that other components, configurations, and steps may be used without parting from the spirit and scope of the claimed invention.

Hereinafter, certain embodiments will be described more fully with reference to the accompanying drawings. It will be apparent to those skilled in the art that various modifications and variations can be made without departing from the inventive concept. Other embodiments will be apparent to those skilled in the art from consideration of the specification and practice disclosed herein. It is to be understood that elements and materials may be substituted for those illustrated and described herein, parts and processes may be reversed or omitted, certain features may be utilized independently, and embodiments or features of embodiments may be combined, all as would be apparent to the skilled person in the art.

The embodiments herein are provided by way of example so that this disclosure will be thorough and complete, and will fully convey the scope of the inventive concept, and that the claims be construed as encompassing all modifications, equivalents and alternatives of the present inventive concept which are apparent to those skilled in the art to which the inventive concept pertains. If nothing else is stated, different embodiments may be combined with each other.

Although reference may be made to directions (e.g. left, right, up, down, upper, lower) as shown in the figures, it will be appreciated that these references are purely for illustrative purposes, and that embodiments are not limited to such directions.

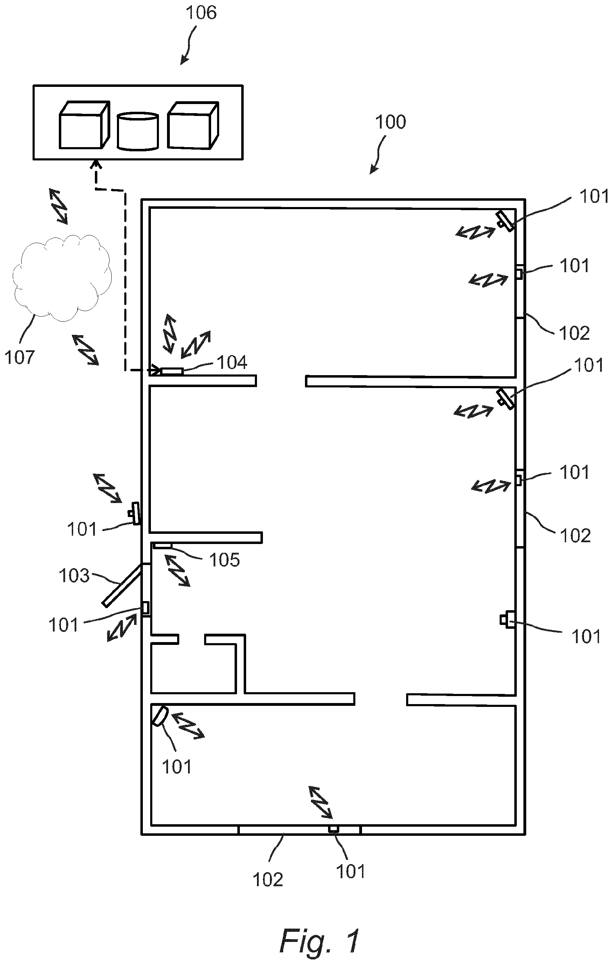

Fig. 1 shows an intruder security system arranged in premises in the form of a building 100. The intruder security system may also be referred to as an alarm system. The building 100 may be a residential building such as a house or an apartment, and/or a commercial building such as an office building, or the like.

The security system may comprise at least one detector 101, and preferably a plurality of detectors 101, for detecting an intruder.

The detectors 101 according to embodiments may be presence detectors sensitive to the presence of persons and/or objects, passage detectors sensitive to the passage of persons and/or objects, or a combination thereof. For example, presence detectors may include motion detectors, such as IR-detectors, while passage detectors may include magnetic sensors arranged at windows 102 and doors 103, such as an entrance door.

The detectors 101 according to embodiments may be perimeter detectors arranged to detect persons and/or objects crossing or breaching a perimeter of the building 100, interior detectors arranged to detect presence or passage of persons and/or objects within an interior of the building 100, exterior detectors arranged to detect presence or passage of persons and/or objects within an exterior of the building 100 (e.g. in an outside space such as a garden or private area or the like), or a combination thereof.

One or more detectors 101 according to embodiments may be a detector 101 based on dual sensors, i.e. a detector 101 using at least two sensing means, optionally two different types of sensing means. For example, a detector 101 according to embodiments may comprise a presence sensor 201 and an image sensor 202 (e.g. comprising image capturing means 203). A detector 101 based on dual sensors may also be referred to as a dual detector.

The intruder security system may further comprise at least one control unit 104 which may also be referred to as a gateway. The control unit 104 may include a processor 204 and an alarm unit for providing an alarm signal when the security system is set off. The control unit 104 is connected to the detectors 101 for receiving signals therefrom. The detectors 101 may, for example, be provided with wireless and/or wired communication means for communicating with the control unit 104.

The control unit 104 may also be connected to input means 105. The input means 105 may be a keypad or similar, for arming and disarming the detectors 101 so as to arm and disarm the security system. In the illustrated embodiment, the input means 105 is arranged in the vicinity of the entrance door. Alternatively, the input means 105 may be arranged in any suitable location or is a portable device, such as a cell phone.

The control unit 104 may be connected to an alarm receiving center 106, such as a remote alarm receiving center. The control unit 104 may be connected to the alarm receiving center 106 by wires, such as a telephone line as indicated in Fig. 1 with a dashed line, or by a wireless telecommunications system such as GSM or other radio frequency systems. The connection may also be through the internet or any other suitable network 107. For example, the control unit 104 may be provided with communication means for communicating with the remote alarm receiving center 106. Alternatively, the alarm receiving center 106 may be located within the premises or within the building 100.

As a further alternative to the above, the control unit 104 may be omitted, and the detectors 101 instead may communicate independently with the alarm receiving center 106, for example, via wireless communication (such as Cat-M LTE).

Howsoever the communication is implemented, the alarm receiving center 106 may alarm one or more operators to a detected intruder. The one or more operators may monitor communications received from the intruder security system. Thus, the one or more operators may, in response to an alarm being triggered, send a patrol unit to the building 100 and/or notify an owner or resident of the building 100.

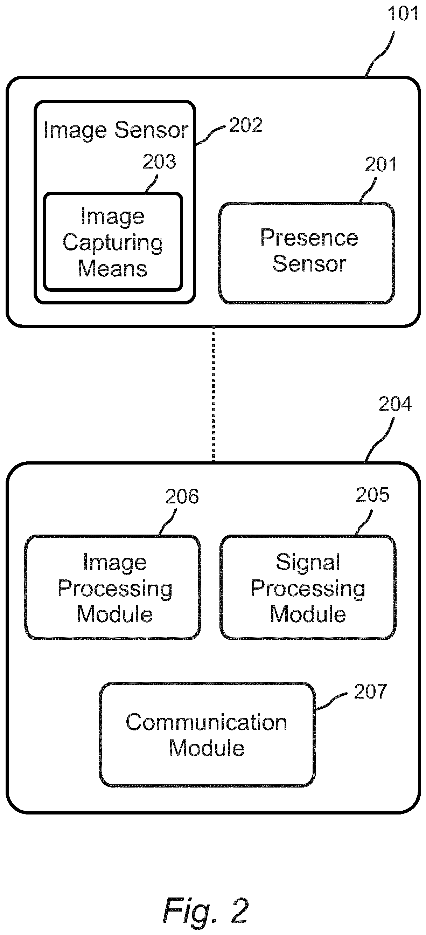

Fig. 2 shows a detector 101 according to embodiments. The detector 101 is a dual sensor detector. The detector 101 may be used in the intruder security system of Fig. 1, or in any other type of intruder security system or alarm system.

The detector 101 is configured to monitor an area to detect an intruder event. An intruder event may be defined as an event where an intrusion has occurred in the monitored area. For example, an intruder event may include an event where an intruder is present in the area and/or where an intruder is moving within and/or through the area. In particular, an intruder event may include a person and/or certain object being present in the area, and/or a motion by a person and/or object being performed in the area. Typical objects may include a human body, an animal, a vehicle such as a car or bicycle, or the like.

The detector 101 comprises at least two different types of sensors. For example, a first sensor type may be a presence sensor 201 and second sensor type may be an image sensor 202 or image-based sensor, for example an image sensor 202 comprising image capturing means 203.

The presence sensor 201 is configured to detect the presence of a person and/or object, for example in the same room as the detector 101 is located. The presence sensor 201 may be a movement sensor, a proximity sensor, or any other sensor capable of detecting the presence of a person and/or object.

In embodiments where the presence sensor 201 is or includes a movement sensor, the presence sensor 201 is configured to detect movement (e.g. movement of a person and/or object), for example in the same room as the detector 101 is located. The movement sensor 201 may include any type of sensor capable of detecting movement of a person and/or object. For example, the movement sensor may include a thermal sensor, a microwave presence sensor, or the like. In particular, the movement sensor may include an infrared sensor such as a passive infrared sensor (also referred to as a PIR sensor).

In embodiments where the presence sensor 201 is or includes a proximity sensor, the presence sensor 201 is configured to detect a person and/or object being in proximity to the movement sensor, for example in the same room as the detector 101 is located. Examples of proximity sensors include infrared sensors such as thermal-MOS (TMOS) sensors, or any other sensor suitable for detecting that a person and/or object is in proximity to the sensor.

Other examples of presence sensors 201 include optical sensors, visual sensors, thermal sensors, radiation-based sensors. In embodiments, the presence sensor may include a low-resolution image sensor capable of detecting the presence of a person and/or object. The low-resolution image sensor may have a lower resolution than the image sensor 202, and may be configured to transmit an output signal indicative of whether a person and/or object is present.

The image sensor 202, and in particular the capturing means 203, is configured to capture one or more images of an area proximate to where the detector 101 is located. For instance, the image capturing means 203 may capture images of the room where the detector 101 is located. The image capturing means 203 may include an imaging device such as a photographic camera or video camera, or any other type of optical sensing device capable of capturing or acquiring one or more images.

The presence sensor 201 and the image sensor 202 may be arranged to detect an intruder within the same area. That is, the presence sensor 201 may be configured to detect motion in an area corresponding to a field of view of the image capturing sensor 202. For example, both the presence sensor 201 and the image sensor 202 may be arranged close to each other and/or facing in substantially the same direction so as to cover the same area of the building 100 or its exterior. Preferably, the presence sensor 201 and the image sensor 202 are arranged in the same housing, e.g. in a housing of an alarm peripheral. Alternatively, the presence sensor 201 and the image sensor 202 may be provided in individual housings arranged to be installed in proximity to each other.

Hence, the detector 101 uses two different types of sensors to detect an intruder (e.g. a person and/or object) within the same area. In particular, input from the two different types of sensors may be used to decide whether an intruder is present within the relevant area. The accuracy of the decision may thus be improved.

The detector 101 may be placed within the building 100 or at an exterior of the building 100. For instance, the detector 101 may be placed at an upper comer of a room in the building 100 and, in this instance, may detect an intruder in said room of the building 100.

The detector 101 may further comprise a processor 204 for processing signals from the presence sensor 201 and/or the image capturing means 203. The processor 204 may also be configured to control the presence sensor 201 and/or the image capturing means 203, e.g. to activate, deactivate and/or send instructions or signals to them.

The presence sensor 201 may be activated at all times. That is, if the intruder security system is armed, the presence sensor 201 is configured to detect motion. Thus, the processor 204 may be configured to monitor, e.g. continuously, a signal received from the presence sensor 201. Since a presence sensor 201, such as a PIR sensor, may be a passive sensor, the continuous detection may be performed without requiring excessive battery power.

The image sensor 202, on the other hand, may require more power to capture images and/or video. Thus, the image sensor 202, and in particular the capturing means 203, may only be activated occasionally. For example, the processor 204 may be configured to activate the image capturing means 203 when the presence sensor 201 has been triggered.

The processor 204 may further include a signal processing module 205 for processing the signal from the presence sensor 201 and an image processing module 206 for processing the image and/or image data acquired or captured by the image sensor 202.

The processor 204 is preferably arranged within the housing of the detector 101. Alternatively, or additionally, at least part of the processor 204 may be arranged remotely from the detector 101. For example, the processor 204 may be arranged on a computer, server or the like located remotely from the detector 101. For example, the processor 204 may at least partly form part of the control unit 104 and/or the alarm receiving center 106. In particular, the signal processing module 205 and/or the image processing module 206 may be provided remotely from the processor 204 of the detector 101. For example, the signal processing module 205 and/or the image processing module 206 may be provided as part of the control unit 104 and/or the alarm receiving center 106.

The processor 204 may further comprise a communication module 207 for communicating with the control unit 104 and/or the alarm receiving center 106. For example, there may be provided wireless communication means for communicating with the control unit 104.

The communication module 207 allows the detector 101 to send and receive wired and/or wireless communications. The communication module 207 may receive and send communications with other devices, such as the control unit 104 and/or the alarm receiving center 106. The communication interface may use a short-range wireless protocol (e.g., WiFi, Bluetooth, Z-Wave, ZigBee, local wireless 900 MHz communication band, etc.) and/or a long-range wireless protocol such as a cellular network.

Although not shown in Fig. 2, the detector 101 may further include a memory. The memory may be configured to store instructions that are executed by the processor 204. The memory may alternatively, or additionally, be configured to store images captured by the image capturing means 203. The memory may be any type of memory capable storing data and may include a combination of a plurality of memory units.

Although not shown in Fig. 2, the detector 101 may comprise a battery for providing power to the detector 101. The battery may be any type of battery capable of delivering power to the detector 101. As an alternative to a battery-powered detector, the detector 101 may be powered by an external power source such as via a wired power connection, e.g. via the mains.

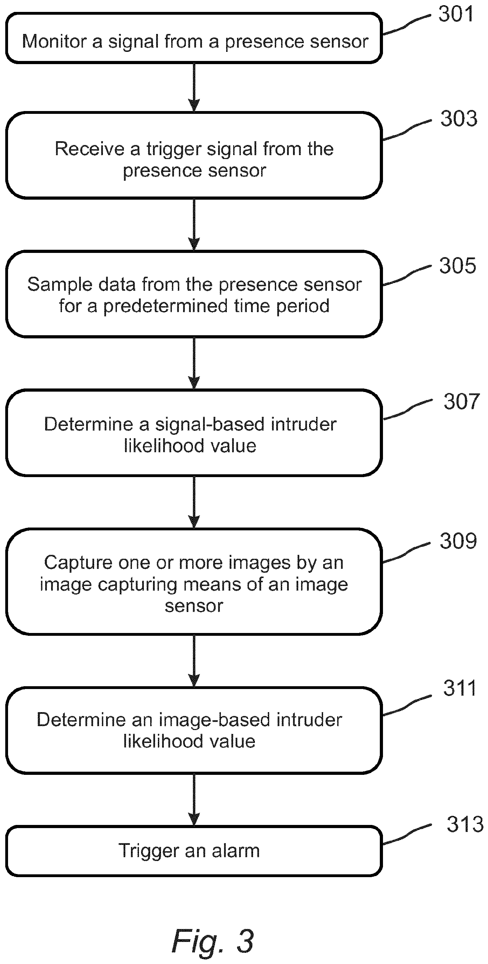

Fig. 3 shows a method of detecting an intruder event according to embodiments.

In step 301, the processor 204 monitors the signal from the presence sensor 201. The output signal from the presence sensor 201 will be dependent on if a person and/or object is present and/or moving in the monitored area. For example, when a movement is detected, a peak will be present in the output signal from the presence sensor 201.

The processor 204 is configured to compare the output signal from the presence sensor 201 with a trigger threshold value. The trigger threshold value is set such that when motion is detected, the trigger threshold value is exceeded. A signal exceeding the threshold may also be referred to as a trigger signal. Hence, the processor 204 is configured to determine when the signal from the presence sensor 201 exceeds the trigger threshold value, i.e. identify when a trigger signal is received from the presence sensor 201. This corresponds to step 303.

In embodiment, the trigger signal may alternatively or additionally be received from another sensor than the presence sensor 201, such as a second presence sensor. That is, the detector 101 may comprise a first presence sensor 201 for receiving a trigger signal and a second presence sensor 201 for the sampling in step 305. The trigger signal may alternatively or additionally be received from e.g. a perimeter detector configured to detect if a person and/or object has passed through a perimeter of the building.

In response to the trigger signal, the signal processing module 205 is, in step 305, configured to sample data from the presence sensor 201. In other words, the detector 101 and/or the processor 204 may be configured to control the signal processing module 205 to initiate a sampling procedure.

The sampling may be performed for a predetermined time period. That is, the signal processing module 205 may sample data during a predetermined period of time after the trigger signal has been received from the presence sensor 201. The predetermined time period may be between 0.2 and 20 seconds, optionally between 0.5 and 15 seconds, optionally between 1 and 10 seconds, optionally between 2 and 8 seconds, optionally between 3 and 7 seconds, optionally between 4 and 6 seconds, optionally substantially 5 seconds. Alternatively, or additionally, the predetermined time period may be at least 0.5 seconds, optionally at least 1 second, optionally at least 2 seconds, optionally at least 3 seconds, optionally at least 4 seconds, optionally at least 5 seconds. Thus, the sampling may be performed for a sufficiently long time period to allow the signal processing module 205 to determine, with relative accuracy, the likelihood of an intruder having been detected by the presence sensor 201. At the same time, the predetermined time is sufficiently short to allow the alarm to the triggered and an operator to be notified before the intruder has left the premises.

In step 307, the signal processing module 205 is configured to determine, based on the sampled data, a likelihood of an intruder event having occurred. For example, the detector 101 and/or the processor 204 may be configured to control the signal processing module 205 to determine the likelihood value. In particular, the signal processing module 205 may determine a likelihood value of an intruder event having occurred during the predetermined time period. The likelihood value determined by the signal processing module 205 may also be referred to as a signal-based likelihood value.

For example, the likelihood value may be a value between 0 and 1, where 0 corresponds to no likelihood of an intruder event, and 1 corresponds to a confirmed intruder event. Thus, a likelihood value of, say, 0.2 corresponds to a low likelihood of an intruder event while a likelihood value of, say, 0.8 corresponds to a high likelihood of an intruder event.

The signal processing module 205 may perform the determination of the likelihood value in dependence on several parameters or characteristics of the sampled data, for example the shape, amplitude, length and/or frequency of one or more peaks in the sampled data.

The signal processing module 205 may further comprise on or more machine learning and/or artificial intelligence algorithms (e.g. convolutional neural networks) configured to make the determination of the likelihood value. The machine learning algorithms may have been trained on a large amount of data, e.g. from a large number of intruder events and non-intruder events, such that the algorithm can recognize patterns in the signal data and determine how likely it is that the sampled data corresponds to an intruder event.

The signal processing module 205 may further be configured to compare the signal-based likelihood value to a signal threshold value. The signal threshold value may be associated with a level of likelihood corresponding to a likely, probable, certain, and/or substantially certain intruder event.

If the likelihood value is higher than or exceeds the signal threshold value, the signal processing module 205 may trigger the alarm, see step 313. For instance, the signal processing module 205 and/or the processor 204 may transmit an alarm signal to the control unit 104 and/or the alarm receiving center 106. Conversely, if the likelihood value does not exceed the threshold for a likely or certain intruder event, the signal processing module 205 may be configured to not transmit an alarm signal.

In response to the trigger signal from the presence sensor 201, i.e. step 303, the processor 204 is further configured to, in step 309, activate the image sensor 202. Upon activation of the image sensor 202, the image capturing means 203 may be configured to capture one or more images. For example, the image capturing means 203 may be configured to capture a plurality of images, such as 2, 3, 4, 5 or more images. Subsequent images may be temporally separated by a time gap. That is, the image capturing means 203 may wait for a predetermined time before each image of the plurality of images are taken. The time gap between two subsequent images may be between 0.1 and 5 second, optionally between 0.2 and 3 seconds, optionally between 0.3 and 1 second, optionally between 0.4 and 0.7 seconds, optionally around 0.5 seconds. This allows the scene captured by the subsequent images to potentially change in response to a movement of an intruder, thus increasing the likelihood of detecting an intruder.

Steps 305 (i.e. sampling data from the presence sensor 201) and step 309 (i.e. capturing images by the image capturing means 203) may be performed simultaneously or substantially simultaneously. For example, the capturing of images may be performed during the predetermined sampling period. As another example, the capturing of images may be performed simultaneously or shortly after the sampling of sensor data has been initiated (e.g. within 1 second, optionally within 0.5 seconds, optionally within 0.1 seconds, optionally within 0.01 seconds, from the start of sampling). That is, the image capturing means 203 may capture one or more images at the same time as the signal processing module 205 starts sampling data from the presence sensor 201.

Thus, the sampled data from the presence sensor 201 and the images captured by the image capturing means 203 will relate to the same temporal scene or event.

Once the images have been captured by the image capturing means 203, the images may be transmitted to the image processing module 206. The image processing module 206 may then, in step 311, process the one or more images to determine a likelihood of an intruder event having occurred.

The image processing module 206 may be initiated after the images have been acquired by the image capturing means 203. For example, the image processing module 206 may be initiated immediately or just after the images have been acquired, or the image processing module 206 may be configured to wait for a time period before the image processing is initiated. The time period may be a predetermined time period. The time period may alternatively be dependent on the progress and/or output of the signal processing module 205.

In particular, the image processing module 206 may determine, based on the taken images, a likelihood value of an intruder event. For example, the detector 101 and/or the processor 204 may be configured to control the image processing module 206 to determine the likelihood value. The likelihood value determined by the image processing module 206 may also be referred to as an image-based likelihood value. For example, the likelihood value may be a value between 0 and 1, where 0 corresponds to no likelihood of an intruder event, and 1 corresponds to a confirmed intruder event. Thus, a likelihood value of, say, 0.2 corresponds to a low likelihood of an intruder event while a likelihood value of, say, 0.8 corresponds to a high likelihood of an intruder event.

The image processing module 206 may determine the likelihood value by performing an image recognition process on the images. For example, the image processing module 206 may be configured to identify whether a certain object (such as a person) is present in the image of if a certain motion (e.g. a person moving, walking, crawling, or the like) can be identified between two images. Additionally, or alternatively, the image processing module 206 may compare the captured images to one or more reference images.

The image processing module 206 may comprise on or more machine learning and/or artificial intelligence algorithms (e.g. convolutional neural networks) configured to make the determination of the likelihood value. The machine learning algorithms may have been trained on a large number of images, e.g. from a large number of intruder events and non-intruder events, such that the algorithm can determine how likely it is that the captured images correspond to an intruder event.

The image processing module 206 may further be configured to compare the image-based likelihood value to an image threshold value. The image threshold value may be associated with a level of likelihood corresponding to a likely, probable, certain, and/or substantially certain intruder event.

Importantly, the signal threshold value need not be equal to the image threshold value. For example, the signal threshold value may be higher or lower than the image threshold value. The threshold values may be set such that substantially all intruder events are detected by the detector 101 (e.g. more than 70% of the intruder events, optionally more than 80% of the intruder events, optionally more than 90% of the intruder events, optionally more than 95% of the intruder events, optionally more than 98% of the intruder events, optionally more than 99% of the intruder events, optionally substantially 100% of the intruder events).

If the image-based likelihood value is higher than or exceeds the image threshold value, the image processing module 206 may trigger the alarm, see step 313. For instance, the image processing module 206 may transmit an alarm signal to the control unit 104 and/or the alarm receiving center 106. Conversely, if the image-based likelihood value does not exceed the threshold for a likely or certain intruder event, the image processing module 206 may be configured to not transmit an alarm signal.

Hence, the alarm is triggered if at least one of the following criteria is fulfilled:
(i) the signal-based likelihood value exceeding the signal threshold value; and/or
(ii) the image-based likelihood value exceeding the image threshold value.

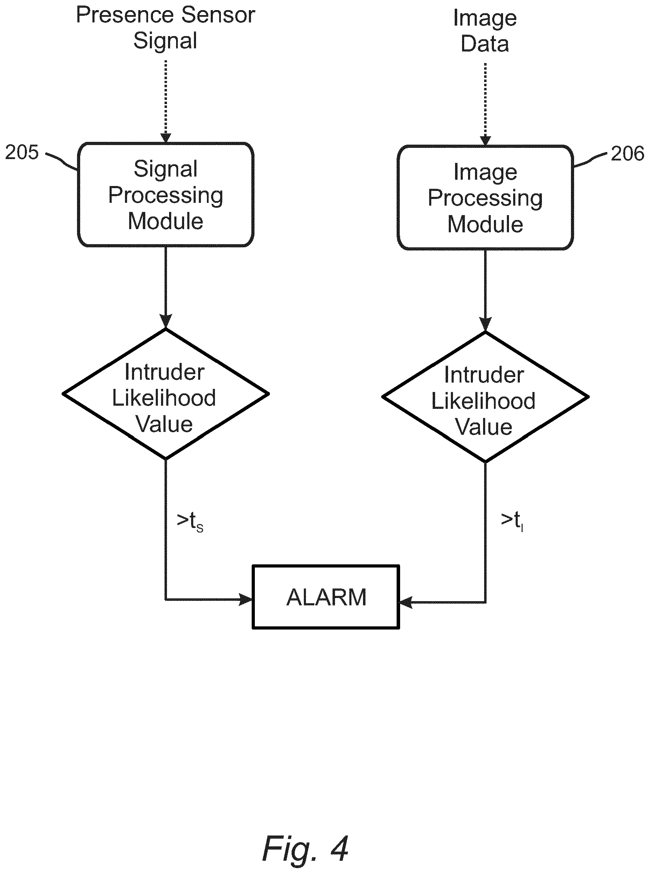

This may also be seen in Fig. 4 which shows a flowchart of the decisions taken by the detector 101 according to embodiments. As can be seen in Fig. 4, the presence sensor signal, from the sampled time period, is fed into the signal processing module 205. The signal processing module 205 then determines a signal-based intruder likelihood value based on the samples data. If the likelihood value is above a signal threshold (denoted ts), the signal processing module 205 triggers the alarm. Similarly, image data from the one or more captured images is fed into the image processing module 206. The image data may be the entire images and/or include lower resolution versions of the captured images, cropped versions of the captured images, selected image data from the captured images (e.g. luminance), or the like. The image processing module 206 then determines an image-based intruder likelihood value based on the image data. If the likelihood value is above an image threshold (denoted t_{I}), the image processing module 206 triggers the alarm.

The detector 101 according to embodiments thus bases its decision on two different and separate modes of detection. Accordingly, the detection accuracy is increased.

For example, in conventional systems relying only on one sensor, the sensor threshold value must typically be set sufficiently low such that substantially all intruder events are detected. This is to ensure that the security system does not miss any intruder events (i.e. no false negatives). However, a relatively low threshold value inevitably also results in many false positives (i.e. raising the alarm when there is no intruder). The detector 101 according to embodiments, on the other hand, allows the threshold value to be higher because it is unlikely that both modes of detection

(i.e. both the presence sensor 201 and the image sensor 202) misses the same intruder event. In other words, if the presence sensor 201 struggles to confidently identify an intruder event, the image sensor 202 may trigger the alarm instead, or vice versa. Hence, the detector 101 according to embodiments reduces the risk of raising the alarm when there is no intruder (i.e. reduces the number of false positives).

As another example, the detector 101 has improved capability of detecting intruder events in a wide range of different environments. For example, a presence sensor on its own may struggle to identify an intruder event if the ambient temperature is warm, because the temperature difference between an intruder and the environment is relatively small. In such a scenario, the detector 101 according to embodiment may still detect the intruder event accurately by relying on the image sensor 202 which does not experience a weakened performance or accuracy due to temperature. Similarly, if the environment is dark or the sight is unclear (e.g. foggy, cloudy, or the like), an image sensor on its own may struggle to identify an intruder event, while the dual detector 101 according to embodiment may still detect the intruder event accurately by relying on the presence sensor 201 which does not need a clear visual sight.

Furthermore, to reduce power consumption, when one of the sensors (e.g. the presence sensor 201 or the image sensor 202) has triggered the alarm, the processor 204 may be configured to turn off the other sensor and/or the other processing means (e.g. interrupt the other processing means in its determination of the intruder likelihood value). In other words, the other sensor and/or the other processing means may be configured to enter a dormant state. For example, if the image processing module 206 requires a longer computing time than the signal processing module 205 to determine its respective likelihood value, the image sensor 202 and/or the image processing module 206 may be turned off if and once the alarm is triggered by the signal processing module 205.

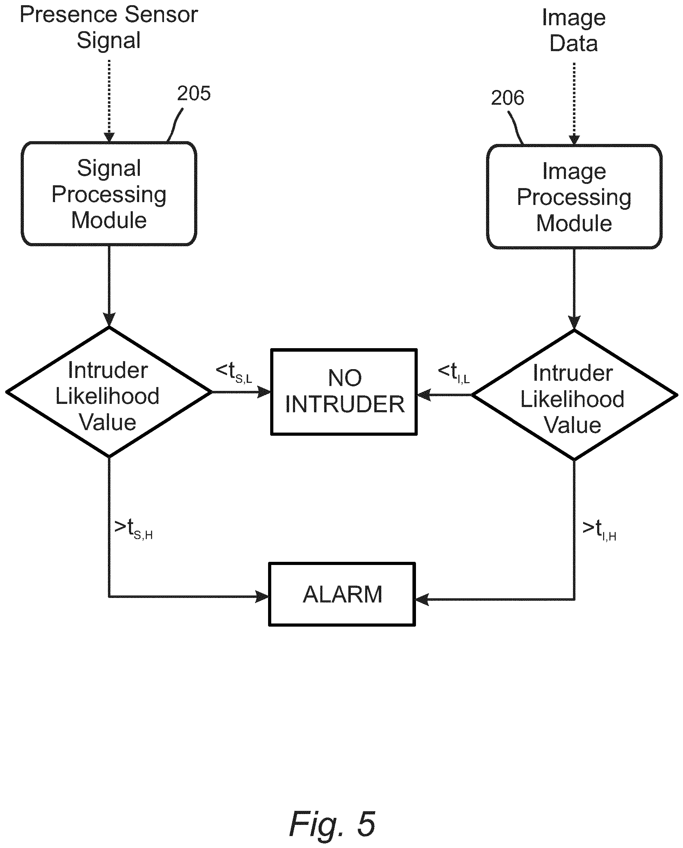

Fig. 5 shows a flowchart of the method in which the processing modules additionally compare their respective likelihood values to respective lower threshold values.

The lower threshold values may be associated with a level of likelihood corresponding to an unlikely, improbable, implausible, impossible, or substantially impossible intruder event. That is, if the likelihood value is below the lower threshold, it is unlikely that an intruder event has occurred.

Each of the processing modules may additionally compare their respective likelihood values to their respective lower threshold values. For example, if the signal processing module 205 determines that the signal-based likelihood value is below a lower signal threshold value (denoted ts,i_), the signal processing module 205 may be configured to determine that no intruder event has occurred. The processor 204 may then terminate the decision process, e.g. turn off the image sensor 202 and/or the image processing module 206. In other words, the image sensor 202 and/or the image processing module 206 may be configured to enter a dormant state. Hence, battery power may be saved because the image processing module 206 is stopped before it has completed its determination. Similarly, if the image processing module 206 determines that the image-based likelihood value is below a lower image threshold value (denoted t_{I,L}), the image processing module 206 may be configured to determine that no intruder event has occurred. The processor 204 may then terminate the decision process, e.g. turn off the presence sensor 201 and/or the signal processing module 205. In other words, the presence sensor 201 and/or the signal processing module 205 may be configured to enter a dormant state. Hence, battery power may be saved because the signal processing module 205 is stopped before it has completed its determination.

Note that the higher thresholds described previously in relation to Fig. 4, have been denoted t_{I,H} and t_{S,H} in Fig. 5 to distinguish from the newly introduced lower thresholds.

It should be further noted that the lower signal threshold value need not be equal to the lower image threshold value. For example, the lower signal threshold value may be higher or lower than the lower image threshold value. The lower threshold values may be set such that substantially no intruder event occurs when the respective likelihood value is below the lower thresholds.

Thus, the processing modules may classify the likelihood value to be in one of three states: (1) INTRUDER/ALARM (e.g. likely intruder event; likelihood value above higher threshold), (2) NO INTRUDER (e.g. unlikely intruder event; likelihood value below lower threshold), and (3) UNCERTAIN (e.g. inconclusive, neither likely nor likely intruder event; likelihood value between the lower and higher thresholds).

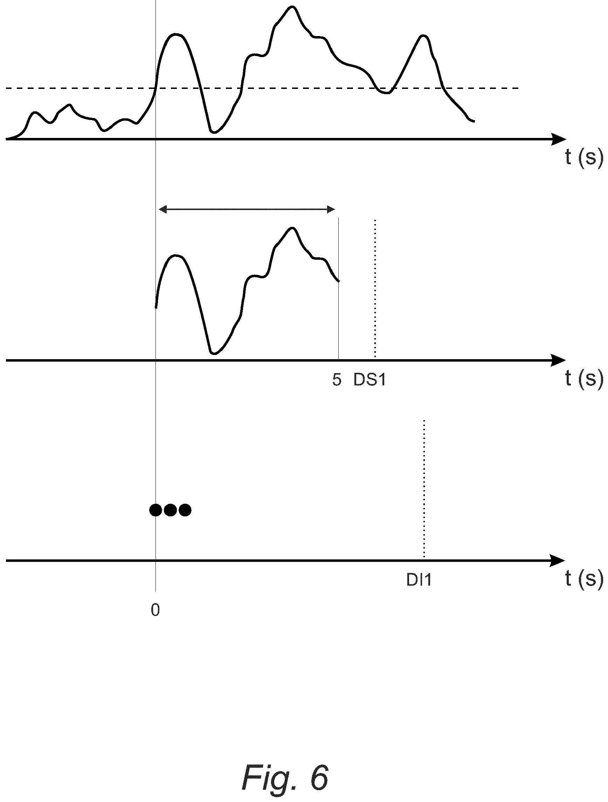

Fig. 6 shows an exemplary timeline of the detection method according to embodiments. Fig. 6 shows three graphs: a top graph showing the signal from the presence sensor 201, a middle graph showing the events of the signal processing module 205, and a bottom graph showing the events of the image processing module 206. The three graphs share the same timeline, e.g. an event occurring at a horizontal position on one of the graphs occurs at the same time as an event occurring at the same horizontal position on another of the graphs.

The top graph shows the signal from the presence sensor 201 as a function of time. The signal from the presence sensor 201 is initially below a threshold level, corresponding to no significant motion occurring in the monitored area. Then, at time t=0, a motion is detected by the presence sensor 201, resulting in its signal increasing above the threshold level. Thus, a trigger signal is received by the processor 204.

At this time, t=0, the signal processing module 205 starts to sample data from the presence sensor 201. This can be seen in the middle graph, where only the sampled data received by the signal processing module 205 is displayed. The sampling lasts for a predetermined time period, which in the shown example is 5 seconds. Once the sampling has been completed, the signal processing module 205 determines the intruder likelihood value as described previously and decides if an intruder event has occurred. Due to the computational time required to process the sampled data and perform the determination, the decision is made at a time DS1 as shown by a dotted line in the middle graph.

Concurrently with the start of sampling, the image sensor 202 starts to capture images. The capturing of images is shown as black dots in the bottom graph. In the shown example, the image sensor 202 is configured to capture 3 images. The first image may be captured simultaneously with the start of sampling, i.e. at t=0. The second and third images may be captured with a time gap from the respective previous image. In the shown example, the second image is taken 0.5 seconds after the first image, i.e. at t=0.5s, while the third image is taken 0.5 seconds after the second image, i.e. at t=1s. Once the images have been acquired, the image processing module 206 determines the intruder likelihood value as described previously and decides if an intruder event has occurred. Due to the computational time required to process the images and perform the determination, the decision is made at a time DI1 as shown by a dotted line in the bottom graph.

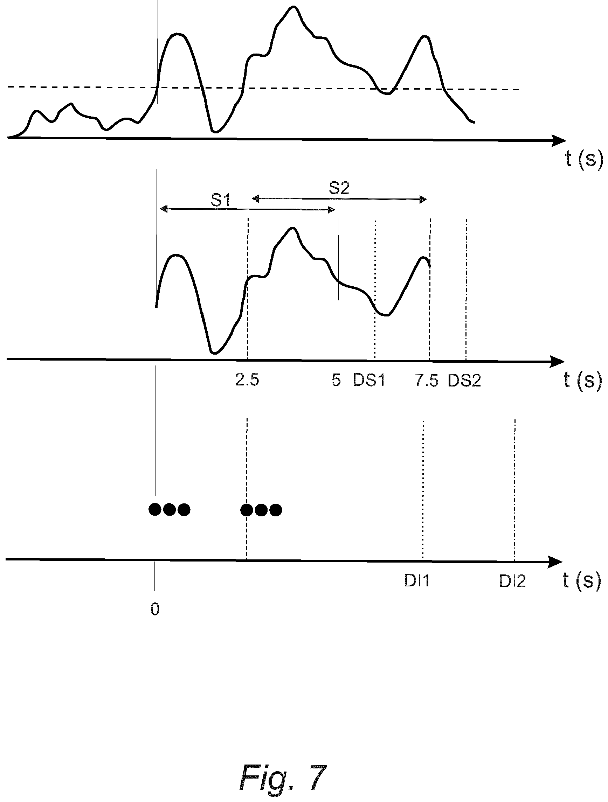

Fig. 7 shows another exemplary timeline of the detection method according to embodiments. In the method shown in Fig. 7, the steps performed by the signal processing module 205 (corresponding to steps 305 to 307 in Fig. 3) and/or the steps performed by the image processing module 206 (corresponding to steps 309 to 311) are repeated one or more times.

As can be seen in Fig. 7, the signal processing module 205 initiates a second sampling step, indicated by dashed vertical lines and denoted S2, at a predetermined time after initiation of the first sampling step. In the shown instance, the second sampling step is initiated at t=2.5 seconds. However, it will be appreciated that the time between the first and second sampling steps may be less than or more than the shown 2.5 seconds. For example, the time between the two steps may be between 0.1 and 10 seconds, optionally between 0.5 and 7 seconds, optionally between 1 and 5 seconds, optionally between 2 and 3 seconds, optionally about 2.5 seconds. The second sampling step may at least partially overlap with the first sampling step, i.e. at least some of the presence sensor signal data will be shared between the first and second samplings. Alternatively, the second sampling step may be independent from the first sampling step, i.e. no temporal overlap may exist. For example, the second sampling step may start when the first sampling step ends.

The signal processing module 205 may then be configured to determine a second signal-based intruder likelihood value based on the sampled data in the second sampling step. The signal processing module 205 then makes a second decision DS2 if an intruder event has occurred. For example, if the first decision from the signal processing module 205 concludes that it is uncertain whether an intruder event has occurred, the second decision may bring more clarity. Thus, if the intruder has moved out of sight (or at least partially out of sight) or is still (i.e. no movement) during the first sample period, the second sample period may still catch the intruder. Accordingly, the accuracy of the detector 101 may be improved.

Together with the second sampling step, the image sensor 202 may additionally be configured to capture a second set of one or more images. Based on the second set of images, the image processing module 206 may be configured to determine a second image-based intruder likelihood value. The image processing module 206 then makes a second decision DI2 if an intruder event has occurred. For example, if one or more of the decisions from the signal processing module 205 and/or the first decision from the image processing module 206 concludes that it is uncertain whether an intruder event has occurred, the second image-based decision may bring more clarity. Thus, if the intruder has moved out of sight (or at least partially out of sight) or is still (i.e. no movement) during the first set of images, the second set of images may still catch the intruder. Accordingly, the accuracy of the detector 101 may be improved.

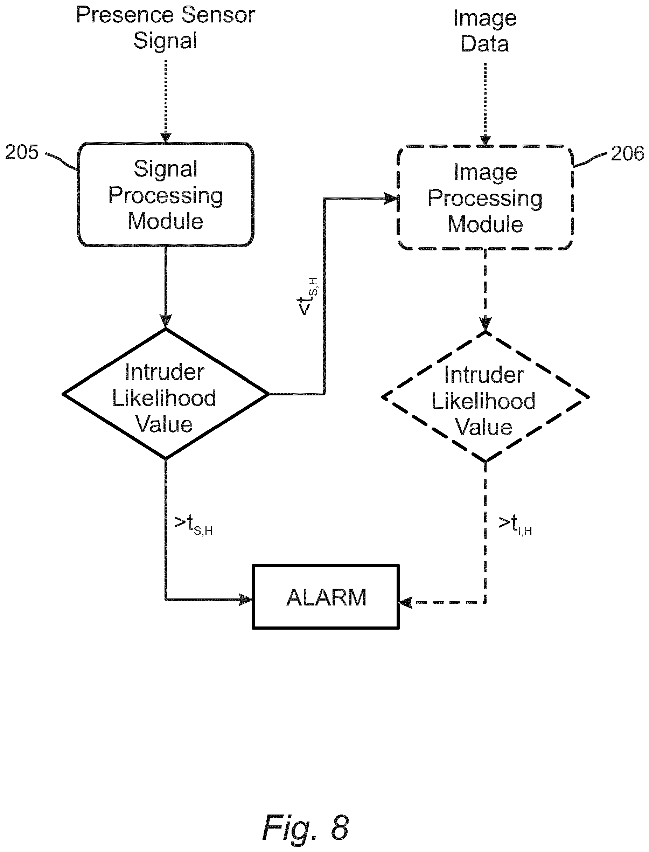

Fig. 8 shows a flowchart of a detection method according to embodiments where image processing is performed in dependence on the decision by the signal processing module 205. The method in Fig. 8 is substantially similar to the previously described method in Figs. 3 to 7.

In the method of Fig. 8, the image processing by the image processing module 206 is only initiated after the signal processing module 205 has made its first decision. In particular, the image processing module 206 may only start processing the captured images if the signal processing module 205 does not trigger the alarm, i.e. if the signal-based likelihood value is below the signal threshold value. Thus, the image-based llikelihood value may only be determined in response to, or if, the signal-based likelihood value is below the sensor threshold value. Accordingly, the relatively more power consuming image processing module 206 is only activated if the signal processing module 205 is unsure whether an intruder event has occurred.

Hence, the image processing module 206 and the image processing procedure is performed in dependency on the outcome of the signal processing module and, in particular, the signal-based intruder likelihood value. This dependency is indicated in Fig. 8 by dashed lines.

In embodiments, the image processing module 206 may perform some, but not all, of its processing steps before the decision is taken by the signal processing module 205, while the remaining steps are performed only when the signal processing module 205 has determined that the signal-based likelihood value is below the sensor threshold value. For example, the image processing module 206 may perform preparatory steps, such as changing the resolution of the images, adjusting parameters of the images, cropping the images, calculating or determining differences between the images, or the like before a decision is taken by the signal processing module 205. However, intensely power consuming steps such as image recognition or determination of the image-based likelihood value, may be performed only once the signal processing module 205 has decided that it is not certain if an intruder event has taken place.

Hence, because the image processing module 206 typically has an extensive power consumption (i.e. the image processing is computationally expensive), power consumption is saved by only initiating the image processing when it is necessary. That is, only when the decision from the presence sensor 201 is certain that an intruder event has occurred. Accordingly, the battery life of the detector 101 may be increased. While power consumption is reduced, the high accuracy of the detection may still be achieved by the dual detection, especially in cases where the presence sensor data is inconclusive. Similarly, and as has been described previously, the number of false positives (triggering the alarm when no intruder event has occurred) is also reduced, in particular because the threshold levels may be increased when two sensors are used.

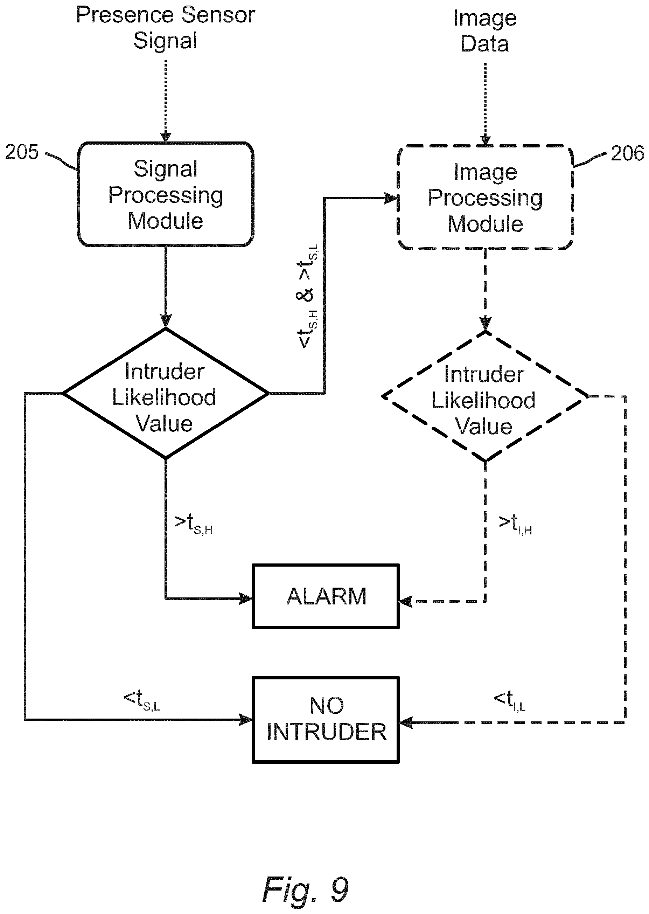

Fig. 9 shows a further implementation of the method in Fig. 8 where lower thresholds have been introduced into the decision-making process. In the method of Fig. 9, each of the processing modules may additionally compare their respective likelihood values to respective lower threshold values, as described previously in relation to Fig. 5.

In this configuration, the image processing module 206 may only be initiated, or the image processing performed, if and once the signal processing module 205 has determined that the signal-based likelihood value is below the higher sensor threshold value but above the lower sensor threshold value. Apart from the additional lower threshold, the features described in relation to Fig. 8 also apply to Fig. 9.

Thus, image processing is only performed when the signal processing module 205 is uncertain whether an intruder event has occurred. That is, the image processing is not performed if the signal processing module 205 has determined that an intruder event (with high likelihood) has taken place (and thus triggered the alarm) or that an intruder event (with high likelihood) has not taken place (and thus terminated the detection process).

Accordingly, the power consumption of the detector 101 may be reduced, and the battery life of the detector 101 may be increased. While power consumption is reduced, the high accuracy of the detector 101 may still be achieved by the dual detection, especially in cases where the presence sensor 201 data is inconclusive. Similarly, and as has been described previously, the number of false positives (triggering the alarm when no intruder event has occurred) is also reduced because the threshold levels may be increased when two sensors are used.

The detector 101 according to embodiments may further be configured to dynamically adjust the signal threshold values and the image threshold values. The dynamical adjustment applies to any suitable detector 101, including the detectors 101 described in relation to Figs. 2 to 9.

The detector 101 may be configured to adjust the threshold values to weigh the decisions from the signal processing module 205 and the image processing module 206. For example, by increasing the sensor threshold value and/or decreasing the image threshold value, the image sensor 202 will have more influence in the final decision. Conversely, by increasing the image threshold value and/or decreasing the sensor threshold value, the presence sensor 201 will have more influence in the final decision.

Thus, the detector 101 may tailor the threshold values such that the most appropriate sensor in a given environment has more influence. For example, if the area where the detector 101 is located is dark, has limited light, and/or has an unclear visual sight, the threshold values may be adjusted such that the presence sensor 201 is more influential. As another example, if the area where the detector 101 is located is warm (e.g. the temperature is relatively close to the body temperature of humans), the threshold values may be adjusted such that the image sensor 202 is more influential. As yet another example, at nighttime (when it is usually dark and potentially relatively cold, in particular if the detector 101 is placed at an outside of a building 100) the threshold values may be adjusted such that the presence sensor 201 is more influential, while at daytime the threshold values may be adjusted such that the image sensor 202 is more influential.

The detector 101 may comprise an ambient sensor to determine one or more ambient properties in dependence on which the adjustment of the threshold values may be made. The ambient properties may include an ambient temperature, an ambient light amount, a time of day, or any other ambient property that may influence the performance of the presence sensor 201 and/or the image sensor 202. The ambient sensor may include a temperature sensor, an ambient light sensor, a means for determining the time, or the like. The detector 101 may alternatively or additionally receive information, e.g. from the control unit 104, comprising data regarding the time of day (e.g. a timestamp), or any other ambient property including temperature and/or ambient light amount. The detector may alternatively or additionally use pixel data (e.g. luminance data) from the one or more captured images by the image sensor 202 to determine an ambient light amount.

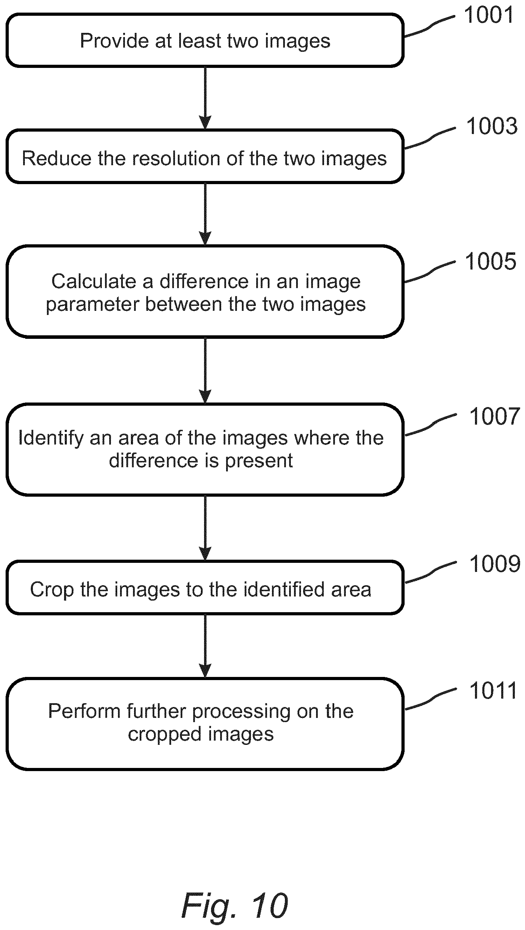

Fig. 10 shows a method of processing a plurality of images. The image processing method may be used by the image processing module 206 to process the images captured by the image capturing means 203 of the image sensor 202. In embodiments, the image processing module 206 is configured to perform the processing method according to Fig. 10.

However, it will be appreciated that embodiments are not limited to use of the method by the image processing module 206, and may include the processing method being used in any suitable scenario, system, or device where images are processed.

In step 1001, at least two images are provided. The images may be captured by the image capturing means 203 of an image sensor 202, or they may be provided by any other suitable means. The images may be provided to an image processing module 206, such as the image processing module 206 of a detector 101 according to embodiments.

In step 1003, the resolution of the images is reduced. For example, the images are downsampled to a lower resolution. Thus, the computational power required to process the images, and in particular to perform steps 1005 to 1007, may be reduced.

In step 1005, a difference in an image parameter between two of the downsampled images may be identified and/or calculated. The difference may be calculated per pixel of the downsampled images, per group of adjacent pixels (e.g. per group of 2, 4, 9 pixels or the like) of the downsampled images, per sub-area of the downsampled images, or the like. Thus, an output will be obtained comprising the difference mapped out across the pixel grid of the image. The image parameter may be a luminance parameter, for example the Y-channel of an image in the YUV-format. Thus, a difference in luminance between the two images may be calculated and mapped out on the pixel grid of the images. The inventors have realised that a difference in luminance typically corresponds to movement of an object between two images.

In step 1007, an area of the images is identified where the difference in the image perimeter is present. For example, an area may be identified where the difference in the image parameter is greater than a lower threshold and/or lower than a higher threshold. As another example, an area may be identified where the difference is relatively large (e.g. compared to other areas). Hence, an area of the images where movement is likely to have occurred is identified.

In step 1009, the images are cropped to the identified area. The images being cropped may be high-resolution images, such as the original versions of the images captured by the image capturing means 203 of the image sensor 202. In such scenario, the downsampled images are only used to identify the relevant areas, whereas further image processing to determine an intruder likelihood value may be performed on versions of the images with higher resolution, thus increasing the accuracy of the image processing.

By cropping the images, areas of the images where no movement is likely to have occurred may be removed. Accordingly, the subsequent steps may only be performed on relevant areas of the images, reducing computational power and time.

In step 1011, further processing is performed on the cropped images. The further processing may include performing image recognition to determine whether a preset object (e.g. a person) exists in the picture, determining an intruder likelihood value (as described previously), or the like. By performing the further processing on the cropped images rather than the entire images, computational power and time may be reduced.

In embodiments, more than two images (e.g. three, four or more images) may be used by the image processing module 206 to determine the intruder likelihood value. In such case, two of the images may be used in steps 1003 to 1007 to calculate the luminance (or other image parameter) difference and identify the area of interest. However, all images may be cropped in step 1009 and the image processing module 206 may also be configured to perform the further processing in step 1011 to all (cropped) images to determine the likelihood value.

The calculated difference in the image parameter may also be used to adjust the image threshold value. For example, if there is a large difference in the image parameter (e.g. luminance) between two captured images (as calculated in step 1005), the inventors have found that this large difference indicates movement of an intruder. Thus, in response to said difference, the image threshold value may be reduced such that the image processing module 206 may trigger the alarm even if the image-based intruder likelihood value is relatively low. For instance, if the difference in the image property is greater than a threshold amount and/or the difference is greater than a threshold amount for at least a minimum number of pixels, the image threshold value may be reduced.

It will be appreciated that although reference have been made to intruder security systems, the detector 101 according to embodiments and the image processing method according to embodiments may be used in many other apparatuses or systems where the accuracy of detection is improved by the use of dual sensors.

Throughout this specification, the word "may" is used in a permissive sense (i.e. meaning having the potential to), rather than in the mandatory sense (i.e. meaning must).

Throughout this specification, the words "comprise", "include", and variations of the words, such as "comprising" and "comprises", "including", "includes", do not exclude other elements or steps.

As used throughout this specification, the singular forms "a", "an", and "the", include plural referents unless explicitly indicated otherwise. Thus, for example, reference to "an" element includes a combination of two or more elements, notwithstanding use of other terms and phrases for one or more elements, such as "one or more" or "at least one".

The term "or" is, unless indicated otherwise, non-exclusive, i.e. encompassing both "and" and "or". For example, the feature "A or B" includes feature "A", feature "B" and feature "A and B".

Unless otherwise indicated, statements that one value or action is "based on", "in response to" and/or "in dependence on" another condition or value or action, encompass both instances in which the condition or value or action is the sole factor and instances where the condition or value or action is one factor among a plurality of factors.

Unless otherwise indicated, statements that "each" instance of some collection have some property should not be read to exclude cases where some otherwise identical or similar members of a larger collection do not have the property, i.e. each does not necessarily mean each and every.

Embodiments include the following numbered clauses:
1. A detector (101) for an intruder security system, the detector (101) comprising:
   a presence sensor (201) configured to detect presence of a person and/or object,
   a signal processing module (205), configured to:
      sample data from the presence sensor (201) for a predetermined time period in response to a trigger signal, and
      determine a first intruder likelihood value in dependence on the sampled data;
      an image sensor (202) comprising an image capturing means (203) configured to capture one or more images in response to the trigger signal, and
      an image processing module (206) configured to determine a second intruder likelihood value in dependence on the captured one or more images,
      wherein the detector (101) is configured to transmit an alarm signal in response to the first intruder likelihood value exceeding a first threshold and/or the second intruder likelihood value exceeding a second threshold.
2. The detector (101) according to clause 1, wherein the detector (101) is configured to transmit the alarm signal in response to the second intruder likelihood value exceeding a second threshold.
3. The detector (101) according to clause 1 or 2, wherein the image processing module (206) is configured to determine the second intruder likelihood value in response to, optionally only in response to, the first intruder likelihood value being below the first threshold.
4. The detector (101) according to any preceding clause, wherein the image processing module (206) is configured to determine the second intruder likelihood value in response to, optionally only in response to, the first intruder likelihood value being above a lower threshold, wherein the lower threshold is lower than the first threshold.
5. The detector (101) according to any preceding clause, wherein the image processing module (206) is configured to enter a dormant state in response to the first intruder likelihood value exceeding the first threshold.
6. The detector (101) according to any preceding clause, wherein the presence sensor (201) comprises at least one selected from a group comprising: a movement sensor, a proximity sensor, an infrared sensor, and a passive infrared sensor.
7. The detector (101) according to any preceding clause, wherein the trigger signal is a signal from the presence sensor (201) exceeding a trigger threshold.
8. The detector (101) according to any preceding clause, wherein the detector (101) is configured to adjust the first and/or second thresholds in dependence on an ambient property.
9. The detector (101) according to clause 8, wherein the ambient property is an ambient temperature, an ambient light amount, a property indicative of a time of day, a time of day, or a combination thereof.
10. The detector (101) according to clause 8 or 9, wherein the detector comprises an ambient sensor for determining the ambient property, wherein optionally the ambient sensor comprises a temperature sensor, an ambient light sensor, or a combination thereof.
11. The detector (101) according to any preceding clause, wherein the predetermined time period is between 0.2 and 20 seconds, optionally between 0.5 and 15 seconds, optionally between 1 and 10 seconds, optionally between 2 and 8 seconds, optionally between 3 and 7 seconds, optionally between 4 and 6 seconds, optionally substantially 5 seconds.
12. The detector (101) according to any preceding clause, wherein the image capturing means (203) is configured to capture a plurality of temporally separated images.
13. The detector (101) according to clause 12, wherein subsequent images of the plurality of images are separated by a time gap of between 0.1 and 5 second, optionally between 0.2 and 3 seconds, optionally between 0.3 and 1 second, optionally between 0.4 and 0.7 seconds, optionally around 0.5 seconds.
14. The detector (101) according to clause 12 or 13, wherein the image processing module (206) is further configured to:
   reduce the resolution of two of the plurality of temporally separated images so as to obtain two low-resolution images;
   calculate a difference in an image parameter between the low-resolution images;
   identify an area of the low-resolution images corresponding to the difference;
   crop the plurality of temporally separated images to the identified area;
   determine the second intruder likelihood value in dependence on the cropped images.
15. The detector (101) according to clause 14, wherein the image parameter is luminance.
16. An intruder security system comprising:
   a detector (101) according to any preceding clause, and
   a control unit (104) configured to raise an alarm in response to receiving the alarm signal from the detector (101).
16. An intruder security system comprising:
   a presence sensor (201) configured to detect presence of a person and/or object,
   a signal processing module (205), configured to:
      sample data from the presence sensor (201) for a predetermined time period in response to a trigger signal, and
      determine a first intruder likelihood value in dependence on the sampled data;
   an image sensor (202) comprising an image capturing means (203) configured to capture one or more images in response to the trigger signal, and
   an image processing module (206) configured to determine a second intruder likelihood value in dependence on the captured one or more images,
   a control unit (104) configured to raise an alarm in response to the first intruder likelihood value exceeding a first threshold and/or the second intruder likelihood value exceeding a second threshold.
17. A method of raising an alarm in dependence on detection an intruder, the method comprising:
   receiving a trigger signal from a presence sensor (201);
   in response to the trigger signal, sampling, by a signal processing module (205), data from the presence sensor (201) for a predetermined time period;
   in response to the trigger signal, acquiring, by an image capturing means (203) of an image sensor (202), one or more images;
   determining, by the signal processing module (205), a first intruder likelihood value in dependence on the sampled data;
   determining, by an image processing module (206), a second intruder likelihood value in dependence on the acquired one or more images;
   transmitting an alarm signal in response to the first intruder likelihood value exceeding a first threshold and/or the second intruder likelihood value exceeding a second threshold.
18. A method of processing a plurality of images, the method comprising:
   reducing the resolution of two images of a plurality of temporally separated images so as to obtain two low-resolution images;
   calculating a difference in an image parameter between the low-resolution images;
   identifying an area of the low-resolution images corresponding to the difference;
   cropping the plurality of temporally separated images to the identified area.
19. The method according to clause 18, wherein the image parameter is luminance.

## Claims

1. A detector (101) for an intruder security system, the detector (101) comprising:
a presence sensor (201) configured to detect presence of a person and/or object;
a signal processing module (205) configured to:
sample data from the presence sensor (201) for a predetermined time period in response to a trigger signal, and
determine a first intruder likelihood value in dependence on the sampled data;
an image sensor (202) comprising an image capturing means (203) configured to capture one or more images in response to the trigger signal; and
an image processing module (206) configured to determine a second intruder likelihood value in dependence on the captured one or more images;
wherein the detector (101) is configured to transmit an alarm signal in response to the first intruder likelihood value exceeding a first threshold and/or the second intruder likelihood value exceeding a second threshold.

2. The detector (101) according to claim 1, wherein the detector (101) is configured to transmit the alarm signal in response to the second intruder likelihood value exceeding a second threshold.

3. The detector (101) according to any preceding claim, wherein the image processing module (206) is configured to determine the second intruder likelihood value in response to, optionally only in response to, the first intruder likelihood value being below the first threshold.

4. The detector (101) according to any preceding claim, wherein the image processing module (206) is configured to determine the second intruder likelihood value in response to, optionally only in response to, the first intruder likelihood value being above a lower threshold, wherein the lower threshold is lower than the first threshold.

5. The detector (101) according to any preceding claim, wherein the image processing module (206) is configured to enter a dormant state in response to the first intruder likelihood value exceeding the first threshold.

6. The detector (101) according to any preceding claim, wherein the presence sensor (201) comprises at least one selected from a group comprising: a movement sensor, a proximity sensor, an infrared sensor, and a passive infrared sensor.

7. The detector (101) according to any preceding claim, wherein the trigger signal is a signal from the presence sensor (201) exceeding a trigger threshold.

8. The detector (101) according to any preceding claim, wherein the detector (101) is configured to adjust the first and/or second thresholds in dependence on an ambient property such as an ambient temperature, an ambient light amount, a property indicative of a time of day, a time of day, or a combination thereof.

9. The detector (101) according to claim 8, wherein the detector comprises an ambient sensor for determining the ambient property, wherein optionally the ambient sensor comprises a temperature sensor, an ambient light sensor, or a combination thereof.

10. The detector (101) according to any preceding claim, wherein the image capturing means (203) is configured to capture a plurality of temporally separated images.

11. The detector (101) according to claim 10, wherein the image processing module (206) is further configured to:
reduce the resolution of two of the plurality of temporally separated images so as to obtain two low-resolution images;
calculate a difference in an image parameter between the low-resolution images;
identify an area of the low-resolution images corresponding to the difference;
crop the plurality of temporally separated images to the identified area;
determine the second intruder likelihood value in dependence on the cropped images.

12. An intruder security system comprising:
a detector (101) according to any preceding claim, and
a control unit (104) configured to raise an alarm in response to receiving the alarm signal from the detector (101).

13. A method of raising an alarm in dependence on detection an intruder, the method comprising:
receiving a trigger signal from a presence sensor (201);
in response to the trigger signal, sampling, by a signal processing module (205), data from the presence sensor (201) for a predetermined time period;
in response to the trigger signal, acquiring, by an image capturing means (203) of an image sensor (202), one or more images;
determining, by the signal processing module (205), a first intruder likelihood value in dependence on the sampled data;
determining, by an image processing module (206), a second intruder likelihood value in dependence on the acquired one or more images;
transmitting an alarm signal in response to the first intruder likelihood value exceeding a first threshold and/or the second intruder likelihood value exceeding a second threshold.

14. A method of processing a plurality of images, the method comprising:
reducing the resolution of two images of a plurality of temporally separated images so as to obtain two low-resolution images;
calculating a difference in an image parameter between the low-resolution images;
identifying an area of the low-resolution images corresponding to the difference;
cropping the plurality of temporally separated images to the identified area.

15. The method according to claim 14, wherein the image parameter is luminance.
